# EUROPEAN PATENT SPECIFICATION

(11) **EP 2 708 171 B1**
(45) Date of publication and mention of the grant of the patent: **01.04.2015**
(21) Application number: 13184203.1
(22) Date of filing: 12.09.2013
(51) Int. Cl.: A47J 45/06

(54) **Handgrip for cooking vessels**
Handgriff für Kochbehälter
Poignée pour récipients de cuisson

(30) Priority: 13.09.2012 IT MI20121512
(43) Date of publication of application: 19.03.2014
(73) Proprietor: La Termoplastic F.B.M. - S.r.l., 21010 Arsago Seprio (Varese) (IT)
(72) Inventor: Munari, Marco, 21010 Cardano al Campo (VA) (IT)
(74) Representative: Ottazzo, Marco Francesco Agostino

(56) References cited:
- EP-A1- 1 792 556
- WO-A1-2006/097630
- JP-U- S6 091 138

## Description

The present invention refers to a handgrip for cooking vessels, usable in particular but not exclusively as a knob for the lid of a saucepan, a frying pan, a pot or similar articles.

As known, the most common vessels intended for cooking food in general, like for example frying pans, saucepans and pots, are provided with handles or handgrips that allow easy gripping, even when the vessel is full and hot. Should such vessels intended for cooking food be provided with a lid, the lid itself is also typically provided with a handgrip or knob that allows it to be gripped by the user.

The knob of a lid for cooking vessels usually consists of a coupling portion with the lid itself and a handgrip portion, which extends upwards from the coupling portion. Known knobs generally consist of monolithic bodies made from thermosetting polymeric materials, so as to ensure suitable heat insulation capabilities.

However, in order to be able to be gripped safely by the user and to avoid the user himself coming into contact with the surface of the lid, usually very hot, the handgrip portion of known knobs is normally voluminous and has overall dimensions in width and in height of the order of a few centimetres. Such dimensions consequently increase the overall bulk of the cooking vessel and of the relative lid, for example in the case of insertion onto shelves, in refrigerators, ovens or to take care of washing steps in dishwashers.

Knobs for cooking vessels provided with respective foldable gripping elements are disclosed, for example, in documents WO 2006/097630 A1, JP S60 91138 U and EP 1 792 556 A1. However, these knobs are not provided with safety systems capable of firmly maintaining the respective gripping elements in their open position, so as to prevent possible burns to the user's hand. Where provided, such security systems are however complex and expensive to be manufactured.

The purpose of the present invention is therefore to make a handgrip for cooking vessels, usable in particular but not exclusively as a knob for the lid of a saucepan, a frying pan, a pot or similar articles, which is able to solve the aforementioned drawback of the prior art in an extremely simple, cost-effective and particularly functional manner.

In detail, a purpose of the present invention is to make a handgrip for cooking vessels that is particularly compact and that allows the cooking vessel to be easily repositioned when not in use, limiting its bulk.

Another purpose of the present invention is to make a handgrip for cooking vessels that always ensures an adequate grip by the user.

A further purpose of the present invention is to make a handgrip for cooking vessels that ensures the heat insulation of such a handgrip with respect to the vessel on which it is applied.

These purposes according to the present invention are accomplished by making a handgrip for cooking vessels, useable in particular but not exclusively as a knob for the lid of a saucepan, a frying pan, a pot or similar articles, as outlined in claim 1.

Further characteristics of the invention are highlighted by the dependent claims, which are an integral part of the present description.

The characteristics and advantages of a handgrip for cooking vessels according to the present invention will become clearer from the following description, given as a non-limiting example, referring to the attached schematic drawings, in which:
figure 1 is a perspective view of a preferred embodiment of the handgrip for cooking vessels according to the present invention, shown in rest or non-use configuration;
figure 1A is a transparent view of a detail of the handgrip for cooking vessels in the configuration of figure 1;
figure 1B is a section view of a detail of the handgrip for cooking vessels in the configuration of figure 1;
figure 2 is a perspective view of the handgrip for cooking vessels of figure 1, shown in an intermediate configuration between the rest or non-use one and that of use;
figure 2A is a transparent view of a detail of the handgrip for cooking vessels in the configuration of figure 2;
figure 2B is a section view of a detail of the handgrip for cooking vessels in the configuration of figure 2;
figure 3 is a perspective view of the handgrip for cooking vessels of figure 1, shown in use configuration;
figure 3A is a transparent view of a detail of the handgrip for cooking vessels in the configuration of figure 3;
figure 3B is a section view of a detail of the handgrip for cooking vessels in the configuration of figure 3;
figure 4 is an exploded perspective view of the handgrip for cooking vessels of figure 1;
figure 4A is a detailed view of a detail of the handgrip for cooking vessels visible in figure 4; and
figure 4B is another detailed view of a detail of the handgrip for cooking vessels visible in figure 4.

With reference to the figures, a handgrip for cooking vessels according to the present invention is shown, wholly indicated with reference numeral 10. The handgrip 10 is preferably configured to be applied to the lid 12 of a generic cooking vessel, like for example a saucepan, a frying pan, a pot or similar articles.

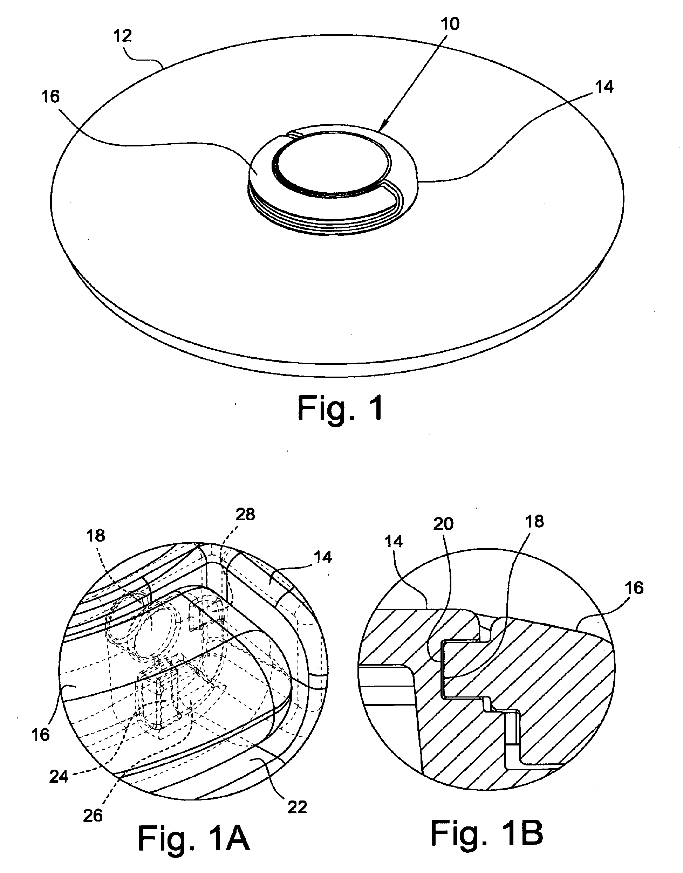

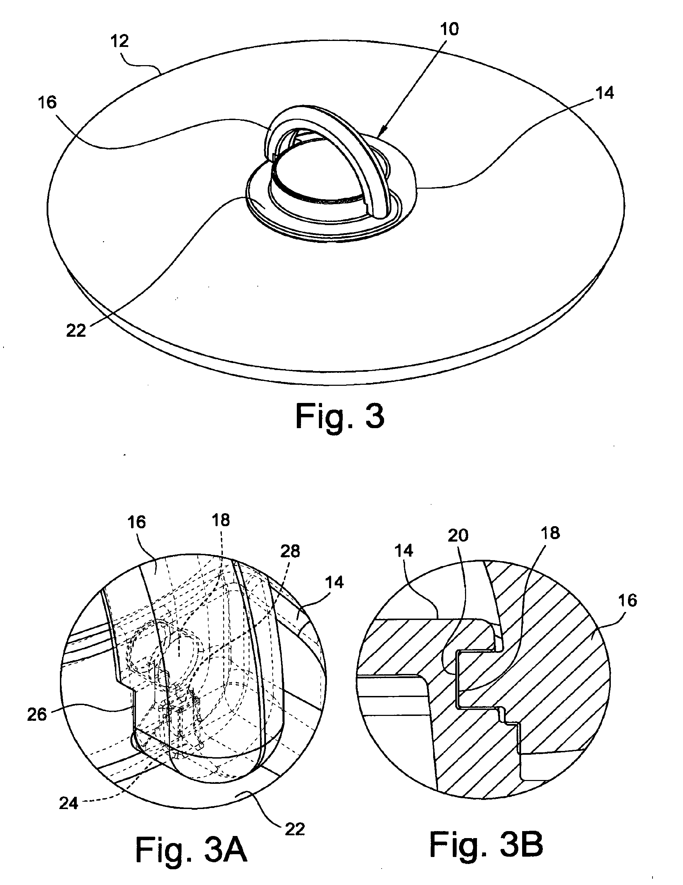

The handgrip 10 is of the type comprising a base element 14, able to be fixed in a *per sé* known way to the lid 12 or to a wall of any cooking vessel, and a gripping element or handle 16, snap-coupled with such a base element 14. The handle 16 is hinged with respect to the base element 14 and can rotate from a closed or folded configuration, in which such a handle 16 rests on the base element 14 in order to allow the handgrip 10 to reduce its own size in height (figure 1), to an open configuration, in which such a handle 16 is raised according to a right angle with respect to the base element 14 and can be gripped to raise the lid 12 or the cooking vessel on which the handgrip 10 is applied (figure 3).

In particular, the base element 14 consists of a monolithic body, preferably manufactured with a thermosetting polymeric material, for example in phenolic resin like Bakelite, and it is preferably disk-shaped. The handle 16 also consists of a monolithic body, preferably manufactured with a thermoplastic polymeric material, for example in synthetic polyamide like nylon, and it is preferably arc-shaped of circumference, more specifically shaped like a half-circumference.

However, this does not rule out that the handle 16 can take up other shapes suitable for the purpose, like for example semi-elliptical or a generic open polygon shape. Consequently, the base element 14, instead of being disk-shaped, can also take up any other shape corresponding to the shape of the handle 16.

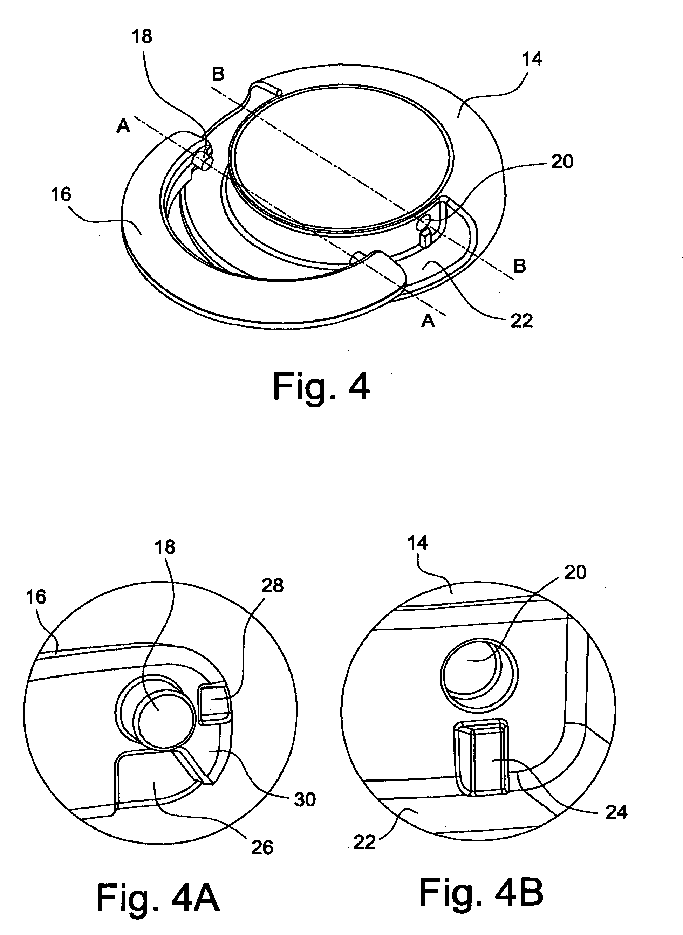

Based on the preferred embodiment shown in the figures, the half-circumference shaped handle 16 is provided, at its opposite ends, with two symmetrical pins 18 oriented along a first axis A-A (figure 4). The two pins 18 of the handle 16 insert into corresponding blind holes 20 formed on opposite portions of the base element 14 and also oriented along a second axis B-B, so as to ensure the rotary movement, about a single axis obtained by superimposing the axes A-A and B-B, of the handle 16 with respect to the base element 14.

The base element 14 of the handgrip 10 is provided with a grooved portion 22, substantially shaped like a half-circumference or in general like any other shape corresponding to the shape of the handle 16, in which such a handle 16 is inserted in a shape coupling configuration when it is in its closed or folded configuration, so that the entire handgrip 10 can occupy as little space as possible in such a closed or folded configuration of the handle 16.

Preferably, the base element 14 is provided, at each of the blind holes 20, with a respective block tooth 24 (figure 4B). Each block tooth 24 is configured so as to cooperate with one or more cavities 26, 28 formed at the pins 18 of the handle 16 (figure 4A) in order to facilitate its movement while passing from its closed or folded configuration to its open configuration and vice-versa, and/or to maintain the handle 16 stably firm in its open configuration.

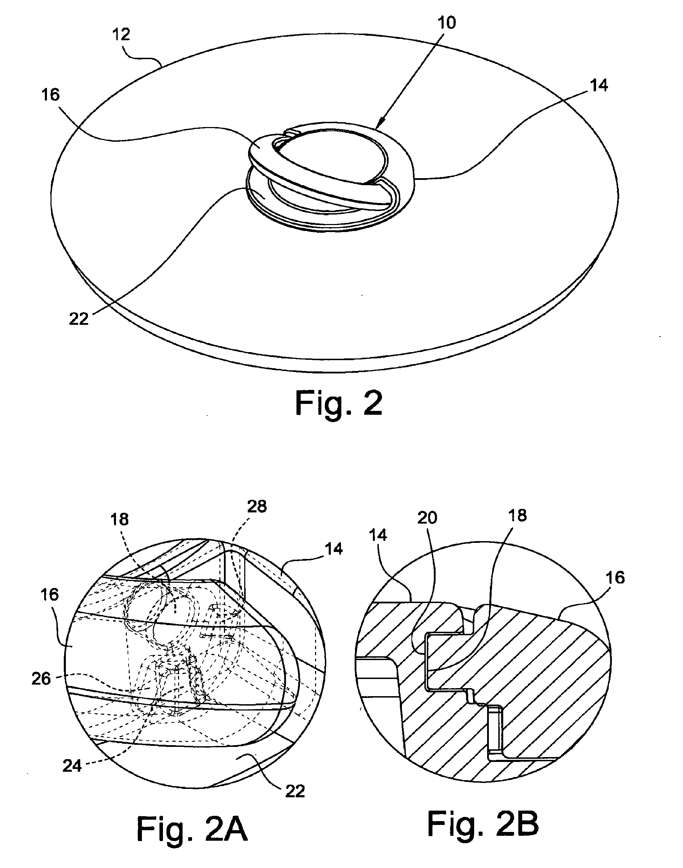

In detail, at each pin 18 of the handle 16 a first rotation cavity 26 is formed having an elongated shape, in which the respective block tooth 24 of the base element 14 is housed when the handle 16 is in its closed or folded configuration (figure 1A) and in which such a block tooth 24 slides during the rotation of the handle 16 itself from its closed or folded configuration to its open configuration (figure 2A). At each pin 18 of the handle 16 a second retainer cavity 28 is also formed, having a shape substantially identical to the shape of the respective block tooth 24, in which such a block tooth 24 stably inserts to maintain the handle 16 stably firm in its open configuration (figure 3A).

Between the first rotation cavity 26 and the second retainer cavity 28 formed on the same end of the handle 16 a protruding portion 30 is interposed (figure 4A). In order to obtain the rotation of the handle 16 from its closed or folded configuration to its open configuration there must therefore be a slight elastic deformation of such a handle 16, so that the block tooth 24 passes from the first rotation cavity 26 to the second retainer cavity 28, passing beyond the protruding portion 30. Vice-versa, in order to obtain the rotation of the handle 16 from its open configuration to its closed or folded configuration there must be an analogous slight elastic deformation of such a handle 16, so that the block tooth 24 passes from the second retainer cavity 28 to the first rotation cavity 26, passing beyond the protruding portion 30 once again.

It has thus been seen that the handgrip for cooking vessels according to the present invention achieves the purposes outlined earlier, being particularly compact in its closed or folded configuration and ensuring safety and easy gripping in its open configuration.

The handgrip for cooking vessels of the present invention thus conceived can in any case undergo numerous modifications and variants, all of which are covered by the same inventive concept; moreover, all of the details can be replaced by technically equivalent elements. In practice, the materials used, as well as the shapes and sizes, can be whatever according to the technical requirements.

The scope of protection of the invention is therefore defined by the attached claims.

## Claims

1. Handgrip (10) for a cooking vessel, usable in particular as a knob of a lid (12), comprising a base element (14), to be fixed to said lid (12) or to a wall of said cooking vessel, and a gripping element or handle (16), snap-coupled with said base element (14), said gripping element or handle (16) being hinged with respect to the base element (14) and being rotatable from a closed or folded configuration, wherein said gripping element or handle (16) rests on the base element (14) in order to allow the handgrip (10) to reduce its own size in height, to an open configuration, wherein said gripping element or handle (16) is raised according to a right angle with respect to the base element (14) and can be gripped in order to raise the lid (12) or the cooking vessel whereon the handgrip (10) is applied, the gripping element or handle (16) being provided, at its opposite ends, with two symmetrical pins (18) oriented along a first axis (A-A), said two pins (18) being inserted in corresponding blind holes (20) obtained on opposite portions of the base element (14) and oriented along a second axis (B-B), so as to ensure the rotary movement, about a single axis obtained by superimposing said first axis (A-A) and second axis (B-B), of said gripping element or handle (16) with respect to the base element (14), the handgrip (10) being **characterized in that** the base element (14) is provided, at each of said blind holes (20), with a respective block tooth (24) configured so as to cooperate with one or more cavities (26, 28) obtained at the pins (18) of the gripping element or handle (16) in order to facilitate its movement while passing from its closed or folded configuration to its open configuration and vice versa, and/or to maintain said gripping element or handle (16) stably firm in its open configuration, wherein at each of the pins (18) of the gripping element or handle (16) a first rotation cavity (26) having an elongated shape is obtained, inside which the respective block tooth (24) of the base element (14) is housed when said gripping element or handle (16) is in its closed or folded configuration and inside which said block tooth (24) slides during the rotation of said gripping element or handle (16) from its closed or folded configuration to its open configuration.

2. Handgrip (10) according to claim 1, **characterized in that** the base element (14) is provided with a grooved portion (22), having substantially a shape corresponding to the shape of the gripping element or handle (16), into which said gripping element or handle (16) is inserted in a shape-coupling configuration when it is in its closed or folded configuration, so that the whole handgrip (10) can occupy as little space as possible in said closed or folded configuration of the gripping element or handle (16).

3. Handgrip (10) according to claim 1, **characterized in that** at each of the pins (18) of the gripping element or handle (16) a second retainer cavity (28) is additionally obtained, which has a shape substantially identical to the shape of the respective block tooth (24) and into which said block tooth (24) stably inserts in order to keep said gripping element or handle (16) stably firm in its open configuration.

4. Handgrip (10) according to claim 3, **characterized in that** between the first rotation cavity (26) and the second retainer cavity (28) obtained on the same end of the gripping element or handle (16) a protruding portion (30) is interposed, in order to obtain the rotation of said gripping element or handle (16) from its closed or folded configuration to its open configuration an elastic deformation of said gripping element or handle (16) having to occur, so that the block tooth (24) passes from the first rotation cavity (26) to the second retainer cavity (28), passing beyond the protruding portion (30), whereas in order to obtain the rotation of said gripping element or handle (16) from its open configuration to its closed or folded configuration a similar elastic deformation of said gripping element or handle (16) having to occur, so that the block tooth (24) passes from the second retainer cavity (28) to the first rotation cavity (26), passing beyond the protruding portion (30) once again.

5. Handgrip (10) according to any of the claims from 1 to 4, **characterized in that** the base element (14) is made of a monolithic body manufactured in a thermosetting polymeric material and is disk-shaped, and **in that** the gripping element or handle (16) is made of a monolithic body manufactured in a thermoplastic polymeric material and is semicircle-shaped.

6. Handgrip (10) according to claim 5, **characterized in that** the base element (14) is manufactured in phenolic resin and the gripping element or handle (16) is manufactured in synthetic polyamide.

7. Handgrip (10) according to claim 6, **characterized in that** said phenolic resin is Bakelite and **in that** said synthetic polyamide is nylon.

## Patentansprüche

1. Handgriff (10) für einen Kochbehälter, der insbesondere als Knauf eines Deckels (12) verwendet werden kann, umfassend ein an dem Deckel (12) oder an einer Wand des Kochbehälters zu befestigendes Basiselement (14) und ein Greifelement oder einen Griff (16), das bzw. der einrastend mit dem Basiselement (14) gekoppelt ist, wobei das Greifelement oder der Griff (16) an das Basiselement (14) angelenkt ist und aus einer geschlossenen oder eingeklappten Anordnung, in der das Greifelement oder der Griff (16) auf dem Basiselement (14) aufliegt, um es dem Handgriff (10) zu ermöglichen, seine Größe in der Höhe zu verringern, in eine geöffnete Anordnung gedreht werden kann, in der das Greifelement oder der Griff (16) in einem rechten Winkel zum Basiselement (14) aufgerichtet ist und gegriffen werden kann, um den Deckel (12) oder den Kochbehälter anzuheben, auf dem der Handgriff (10) angebracht ist, wobei das Greifelement oder der Griff (16) an seinen entgegengesetzten Enden mit zwei symmetrischen Zapfen (18) versehen ist, die entlang einer ersten Achse (A-A) ausgerichtet sind, wobei diese zwei Zapfen (18) in entsprechende Sacklöcher (20) eingefügt sind, die auf entgegengesetzten Abschnitten des Basiselements (14) ausgebildet und entlang einer zweiten Achse (B-B) ausgerichtet sind, um die Drehbewegung des Greifelements oder Griffs (16) gegenüber dem Basiselement (14) um eine einzige Achse, die durch Überlagerung der ersten Achse (A-A) und der zweiten Achse (B-B) erhalten wird, zu gewährleisten, wobei der Handgriff (10) **dadurch gekennzeichnet** ist, dass das Basiselement (14) bei jedem der Sacklöcher (20) mit einem entsprechenden Zahn (24) versehen ist, der gestaltet ist, um mit einem oder mehreren Hohlräumen (26, 28), die an den Zapfen (18) des Greifelements oder Griffs (16) ausgebildet sind, zusammenzuwirken, um seine Bewegung zu begünstigen, während es bzw. er von seiner geschlossenen oder eingeklappten Anordnung in seine geöffnete Anordnung und umgekehrt übergeht, und/oder das Greifelement oder den Griff (16) stabil in seiner geöffneten Anordnung festzuhalten, wobei an jedem der Zapfen (18) des Greifelements oder Griffs (16) ein erster Rotationshohlraum (26) mit einer länglichen Form ausgebildet ist, in dem der jeweilige Sperrzahn (24) des Basiselements (14) untergebracht ist, wenn sich das Greifelement oder der Griff (16) in seiner geschlossenen oder eingeklappten Anordnung befindet, und in dem dieser Sperrzahn (24) während der Drehung des Greifelements oder Griffs (16) aus seiner geschlossenen oder eingeklappten Anordnung in seine geöffnete Anordnung gleitet.

2. Handgriff (10) nach Anspruch 1, **dadurch gekennzeichnet, dass** das Basiselement (14) mit einem genuteten Abschnitt (22) mit einer im Wesentlichen der Form des Greifelements oder Griffs (16) entsprechenden Form versehen ist, in den das Greifelement oder der Griff (16) in einer formschlüssigen Verbindungsanordnung eingefügt ist, wenn es sich in seiner geschlossenen oder eingeklappten Anordnung befindet, so dass der ganze Handgriff (10) in der geschlossenen oder eingeklappten Anordnung des Greifelements oder Griffs (16) möglichst wenig Raum einnehmen kann.

3. Handgriff (10) nach Anspruch 1, **dadurch gekennzeichnet, dass** in jedem der Zapfen (18) des Greifelements oder Griffs (16) zusätzlich ein zweiter Haltehohlraum (28) ausgebildet ist, dessen Form im Wesentlichen gleich der des entsprechenden Sperrzahns (24) ist und in den sich der Sperrzahn (24) stabil eingefügt, um das Greifelement oder den Griff (16) in seiner geöffneten Anordnung stabil festzuhalten.

4. Handgriff (10) nach Anspruch 3, **dadurch gekennzeichnet, dass** zwischen dem ersten Rotationshohlraum (26) und dem zweiten Haltehohlraum (28), die am selben Ende des Greifelements oder Griffs (16) ausgebildet sind, ein vorstehender Abschnitt (30) eingefügt ist, wobei zum Erhalten der Drehung des Greifelements oder Griffs (16) aus seiner geschlossenen oder eingeklappten Anordnung in seine geöffnete Anordnung eine elastische Verformung des Greifelements oder Griffs (16) eintreten muss, so dass sich der Sperrzahn (24) vom ersten Rotationshohlraum (26) zum zweiten Haltehohlraum (28) bewegt, indem er sich über den vorstehenden Abschnitt (30) hinweg bewegt, während zum Erhalten der Drehung des Greifelements oder Griffs (16) aus seiner geöffneten Anordnung in seine geschlossene oder eingeklappte Anordnung eine gleichartige elastische Verformung des Greifelements oder Griffs (16) eintreten muss, so dass sich der Sperrzahn (24) vom zweiten Haltehohlraum (28) zum ersten Rotationshohlraum (26) bewegt, indem er sich erneut über den vorstehenden Abschnitt (30) hinweg bewegt.

5. Handgriff (10) nach einem der Ansprüche von 1 bis 4, **dadurch gekennzeichnet, dass** das Basiselement (14) aus einem monolithischen Körper besteht, der aus einem wärmehärtendem Polymermaterial hergestellt und scheibenförmig ist, und dadurch, dass das Greifelement oder der Griff (16) aus einem monolithischen Körper besteht, der aus einem wärmehärtenden Polymermaterial hergestellt und halbkreisförmig ist.

6. Handgriff (10) nach Anspruch 5, **dadurch gekennzeichnet, dass** das Basiselement (14) aus Phenolharz hergestellt ist und das Greifelement oder der Griff (16) aus synthetischem Polyamid hergestellt ist.

7. Handgriff (10) nach Anspruch 6, **dadurch gekennzeichnet, dass** das Phenolharz Bakelit ist, und dadurch, dass das synthetische Polyamid Nylon ist.

## Revendications

1. Poignée (10) pour un récipient de cuisson, utilisable en particulier comme un bouton d'un couvercle (12), comprenant un élément de base (14), destiné à être fixé audit couvercle (12) ou à une paroi dudit récipient de cuisson, et un élément de préhension ou poignée (16), couplé par encliquetage avec ledit élément de base (14), ledit élément de préhension ou poignée (16) étant articulé par rapport à l'élément de base (14) et pouvant tourner d'une configuration fermée ou repliée, dans laquelle ledit élément de préhension ou poignée (16) repose sur l'élément de base (14) de manière à permettre à la poignée (10) de réduire sa propre taille en hauteur, à une configuration ouverte, dans laquelle ledit élément de préhension ou poignée (16) est dressé suivant un angle droit par rapport à l'élément de base (14) et peut être saisi de manière à soulever le couvercle (12) ou le récipient de cuisson sur lequel la poignée (10) est appliquée, l'élément de préhension ou poignée (16) étant muni, à ses extrémités opposées, de deux goupilles symétriques (18) orientées suivant un premier axe (A-A), lesdites deux goupilles (18) étant insérées dans des trous borgnes correspondants (20) ménagés sur des portions opposées de l'élément de base (14) et orientés suivant un deuxième axe (B-B), de manière à garantir le mouvement de rotation, autour d'un unique axe obtenu en superposant lesdits premier axe (A-A) et deuxième axe (B-B), dudit élément de préhension ou poignée (16) par rapport à l'élément de base (14), la poignée (10) étant **caractérisée en ce que** l'élément de base (14) est pourvu, au niveau de chacun desdits trous borgnes (20), d'une dent de blocage respective (24) configurée de manière à coopérer avec une ou plusieurs cavités (26, 28) ménagées au niveau des goupilles (18) de l'élément de préhension ou poignée (16) de manière à faciliter son mouvement lors du passage de sa configuration fermée ou repliée à sa configuration ouverte et inversement, et/ou à maintenir ledit élément de préhension ou poignée (16) ferme de manière stable dans sa configuration ouverte, dans laquelle une première cavité de rotation (26) ayant une forme allongée est ménagée au niveau de chaque goupille (18) de l'élément de préhension ou poignée (16), à l'intérieur de laquelle la dent de blocage respective (24) de l'élément de base (14) est logée quand ledit élément de préhension ou poignée (16) est dans sa configuration fermée ou repliée et à l'intérieur de laquelle ladite dent de blocage (24) coulisse durant la rotation dudit élément de préhension ou poignée (16) de sa configuration fermée ou repliée à sa configuration ouverte.

2. Poignée (10) selon la revendication 1, **caractérisée en ce que** l'élément de base (14) est pourvu d'une portion rainurée (22), ayant sensiblement une forme correspondant à la forme de l'élément de préhension ou poignée (16), dans laquelle ledit élément de préhension ou poignée (16) est inséré dans une configuration d'accouplement de forme quand il est dans sa configuration fermée ou repliée, de manière que la poignée complète (10) puisse occuper aussi peu d'espace que possible dans ladite configuration fermée ou repliée de l'élément de préhension ou poignée (16).

3. Poignée (10) selon la revendication 1, **caractérisée en ce qu'**une deuxième cavité de retenue (28) est ménagée de plus au niveau de chacune des goupilles (18) de l'élément de préhension ou poignée (16), laquelle a une forme sensiblement identique à la forme de la dent de blocage respective (24) et dans laquelle ladite dent de blocage (24) s'insère de manière stable de manière à maintenir ledit élément de préhension ou poignée (16) ferme de manière stable dans sa configuration ouverte.

4. Poignée (10) selon la revendication 3, **caractérisée en ce qu'**une portion en saillie (30) est interposée entre la première cavité de rotation (26) et la deuxième cavité de retenue (28) ménagées sur la même extrémité de l'élément de préhension ou poignée (16), de manière à obtenir la rotation dudit élément de préhension ou poignée (16) de sa configuration fermée ou repliée à sa configuration ouverte, une déformation élastique dudit élément de préhension ou poignée (16) devant se produire, de manière que la dent de blocage (24) passe de la première cavité de rotation (26) à la deuxième cavité de retenue (28), en passant au-delà de la portion en saillie (30), alors que, de manière à obtenir la rotation dudit élément de préhension ou poignée (16) de sa configuration ouverte à sa configuration fermée ou repliée, une déformation élastique similaire dudit élément de préhension ou poignée (16) devant se produire, de manière que la dent de blocage (24) passe de la deuxième cavité de retenue (28) à la première cavité de rotation (26), en passant encore une fois au-delà de la portion en saillie (30).

5. Poignée (10) selon l'une quelconque des revendications 1 à 4, **caractérisée en ce que** l'élément de base (14) est constitué d'un corps monolithique fabriqué en un matériau polymère thermodurcissable et est en forme de disque, et **en ce que** l'élément de préhension ou poignée (16) est constitué d'un corps monolithique fabriqué en un matériau polymère thermodurcissable et est en forme de demi-cercle.

6. Poignée (10) selon la revendication 5, **caractérisée en ce que** l'élément de base (14) est fabriqué en résine phénolique et l'élément de préhension ou poignée (16) est fabriqué en polyamide synthétique.

7. Poignée (10) selon la revendication 6, **caractérisée en ce que** ladite résine phénolique est la bakélite et **en ce que** ledit polyamide synthétique est le nylon.
